# EUROPÄISCHE PATENTANMELDUNG

(11) **EP 4 194 478 A1**
(43) Veröffentlichungstag der Anmeldung: **14.06.2023**
(21) Anmeldenummer: 21212673.4
(22) Anmeldetag: 07.12.2021
(51) Int. Cl.: C08G 64/00

(54) **VERBESSERTE HYDROLYSESTABILITÄT BEI POLYCARBONAT-ZUSAMMENSETZUNGEN**

(71) Anmelder: Covestro Deutschland AG, 51373 Leverkusen (DE)
(72) Erfinder: WEHRMANN, Rolf, 51373 Leverkusen (DE); BOUMANS, Anke, 51373 Leverkusen (DE)
(74) Vertreter: Levpat

(57) **Zusammenfassung**

Beschrieben ist die Verwendung von mindestens zwei aromatischen Polycarbonaten unterschiedlicher Viskosität, von denen mindestens eines Alkylphenol-Endgruppen aufweist, zur Erzielung einer verbesserten Hydrolysestabilität gegenüber einer solchen thermoplastischen Zusammensetzung, die nur ein aromatisches Polycarbonat enthält, das im Wesentlichen die gleiche Viskosität aufweist wie die Mischung der mindestens zwei aromatischen Polycarbonate.

## Beschreibung

Die Erfindung betrifft die Verwendung von Mischungen aus mindestens zwei verschiedenen aromatischen Polycarbonaten unterschiedlicher Viskosität.

Thermoplastische Zusammensetzungen sind für eine Vielzahl von Anwendungen geeignet und eine beliebte Materialalternative, da sie gut verarbeitbar sind und vergleichsweise einfach in die unterschiedlichsten Formteile überführt werden können.

Polycarbonat ist dabei ein besonders interessantes Material, da es eine hohe Wärmeformbeständigkeit und eine hohe Zähigkeit bei Raumtemperatur aufweist. Es lässt sich in unterschiedlichsten Materialerscheinungsformen bereitstellen. Je nach Rezepturbestandteilen sind unterschiedlichste Materialien mit breiten Eigenschaftsprofilen hinsichtlich der thermischen, rheologischen und mechanischen Eigenschaften erreichbar. Die Einsatzmöglichkeiten von Polycarbonat sind entsprechend vielfältig, beispielsweise im Automobilbereich, für Schienenfahrzeuge, für den Bausektor, im Bereich Elektro/Elektronik/IT, Batteriegehäuse, für Haushaltsgeräte, im Beleuchtungssektor für Innen- und Außenanwendungen, für 3D-Printing oder im Bereich der Medizintechnik (Medical-Produkte wie Dialysatoren, Luer-Systeme, Hähne oder Tuben).

Zur Einstellung und Regulierung des Molekulargewichts und damit auch der Viskosität werden beim Phasengrenzflächenverfahren aromatische Monohydroxyverbindungen im Gemisch mit aromatischen Dihydroxyverbindungen eingesetzt. Über die molaren Verhältnisse der beiden aromatischen Hydroxyverbindungen lassen sich gezielt die gewünschten Molekulargewichte einstellen. Die Molekulargewichte bestimmen direkt die Lösungs- und Schmelzviskositäten: Mit steigenden Molekulargewichten nehmen auch die Schmelzviskositäten zu.

Die Kerbschlagzähigkeit ist neben der hohen Wärmeformbeständigkeit und den guten optischen Eigenschaften die dritte Kerneigenschaft von aromatischen Polycarbonaten, die dadurch über ein einzigartiges Eigenschaftsprofil verfügen.

In Umgebungen mit feuchter Atmosphäre kommt es häufig zu einer Verschlechterung der Kerbschlagzähigkeit als Folge unzureichender Hydrolysestabilität aromatischer Polycarbonate. Bei längerer Feuchtelagerung in einem Klimaschrank mit definierter Temperatur und relativer Feuchte oder in einem Kochtest, die jeweils einen realen Anwendungszweck simulieren sollen, ist üblicherweise ein Molekulargewichtsabbau zu beobachten, der praktisch nicht vermeidbar ist und auch für Polyester typisch ist. Niedrigere Molekulargewichte führen zu schlechteren mechanischen und thermischen Eigenschaften. Dies ist besonders bei Polycarbonaten von Bedeutung, die in alkalischer Lösung nach dem Phasengrenzflächenverfahren hergestellt wurden, da Restalkalimengen im isolierten Polycarbonat verbleiben. Bei Feuchtelagerungen ist dann ein besonders starker Polymerabbau zu beobachten. Den Effekt der unzureichenden Hydrolysestabilität gilt es, so weit wie möglich zu vermeiden, um die mechanischen Eigenschaften, speziell die Kerbschlagzähigkeit, auf einem guten Niveau zu erhalten. Funktionstüchtige Hydrolysestabilisatoren sind in der Polycarbonatchemie nicht bekannt.

Der Einsatz von Epoxidverbindungen oder wasserabsorbierenden anorganischen Salzen ist theoretisch möglich, führt aber zu anderen Nachteilen. Epoxidverbindungen können auch mit der Polycarbonatkette reagieren, wodurch sich die rheologischen Eigenschaften der Polycarbonatzusammensetzungen ändern. Die anorganischen Salze, beispielsweise Aluminiumhydroxide, führen häufig zu Trübungen und katalysieren den Polymerabbau.

Auch die für andere Polymerklassen beschriebenen Carbodiimide sind für Polycarbonatzusammensetzungen nicht geeignet, da die aus der Reaktion mit Wasser (Feuchtigkeit) entstehenden Harnstoffderivate ebenfalls mit der Polycarbonatkette reagieren und in diesem Fall zu einem Polymerabbau führen.

Es bestand daher die Aufgabe, die Hydrolysestabilität einer Polycarbonat-basierten Zusammensetzung zu verbessern, wobei sich die Verbesserung gegenüber einer Referenzzusammensetzung zeigen sollte, welche annähernd dieselbe Viskosität, verstanden als Schmelze-Volumenfließrate MVR, aufweist wie die verbesserte Zusammensetzung.

Überraschend hat sich gezeigt, dass diese Aufgabe gelöst wird durch die Verwendung einer Mischung von mindestens zwei aromatischen Polycarbonaten mit unterschiedlicher Schmelze-Volumenfließrate MVR, wobei mindestens ein aromatisches Polycarbonat Alkylphenol-Endgruppen, bevorzugt p-tert.-Butylphenol-Endgruppen, aufweist, in einer Gesamtmenge M1 in einer thermoplastischen Polycarbonat-Zusammensetzung Z1, wobei die thermoplastische Polycarbonat-Zusammensetzung Z1 eine Schmelzevolumenfließrate MVR1 aufweist, anstelle eines aromatischen Polycarbonats in insgesamt derselben Menge M1 in einer thermoplastischen Polycarbonat-Zusammensetzung Z2 aufweisend eine Schmelzevolumenfließrate MVR2 = (MVR1 ± 10%). Die Zusammensetzungen unterscheiden sich somit lediglich darin, dass die Menge M1 aus aromatischem Polycarbonat unterschiedliche Polycarbonate umfasst, während die thermoplastischen Polycarbonat-Zusammensetzungen Z1 und Z2 ansonsten identisch sind und optional weiteres aromatisches Polycarbonat und/oder ein oder mehrere Additiv(e) und/oder weitere Polymere enthalten.

Gegenstand der Erfindung ist somit die Verwendung nach Anspruch 1.

Es versteht sich, dass die Angabe "± 10%" berechnet wird auf einer Basis von MVR1 = 100% und der Differenz aus MVR2 und MVR1.

Das eine aromatische Polycarbonat in der Menge M2 = M1 in der Zusammensetzung Z2, also in der Gesamtzusammensetzung der Referenz, weist nur eine Art von Endgruppen, z.B. nur p-tert.-Butylphenolendgruppen, Cumylphenolendgruppen oder nur Phenol-Endgruppen, auf. Die Gesamtzusammensetzung der sich erfindungsgemäß ergebenden Polycarbonat-Zusammensetzung ist als "Z1" bezeichnet. Diese enthält eine Mischung von Polycarbonaten mit bevorzugt unterschiedlichen Endgruppen, wobei mindestens ein aromatisches Polycarbonat Alkylphenol-Endgruppen, bevorzugt tert.-Butylphenol-Endgruppen, aufweist. Diese Mischung ist genau in einer solchen Menge in der Zusammensetzung Z1 enthalten, die der Menge des aromatischen Polycarbonats aus der Zusammensetzung Z2, die durch die Mischung der Polycarbonate ersetzt wird, entspricht, bezeichnet als "M1". Daneben können die Referenzzusammensetzung Z2 und sich erfindungsgemäße ergebende Zusammensetzung Z1 Additive, aber auch weiteres Polycarbonat, enthalten. Besonders bevorzugt umfasst die Mischung neben Polycarbonat mit tert.-Butylphenol-Endgruppen Polycarbonat mit Phenol-Endgruppen.

Eine unterschiedliche Schmelzevolumenfließrate wird erfindungsgemäß so verstanden, dass die jeweiligen Polycarbonate, die Bestandteil der erfindungsgemäßen Polycarbonatzusammensetzungen sind, eine unterschiedliche Viskosität und daher auch unterschiedliche Molekulargewichte aufweisen.

Die Hydrolysestabilität einer Polycarbonat-Zusammensetzung wird erfindungsgemäß bevorzugt ermittelt durch Messung der Izod-Kerbschlagzähigkeit nach ISO 180 (2019) an 80 mm x 10 mm x 3 mm Normprüfstäben vor Durchführung einer Feuchtelagerung unter thermischer Belastung und nach einem definierten Zeitraum, der beispielsweise 50h, 100h oder 250h lang ist, und zwar als Veränderung der Izod-Kerbschlagzähigkeit der jeweiligen thermoplastischen Polycarbonat-Zusammensetzung Z1 oder Z2 vor und nach Feuchtelagerung unter thermischer Belastung über einen definierten Zeitraum. Eine Verbesserung der Hydrolysestabilität der thermoplastischen Polycarbonat-Zusammensetzung Z1 gegenüber der thermoplastischen Polycarbonat-Zusammensetzung Z2 liegt vor, wenn bei der Polycarbonat-Zusammensetzung Z1 erkennbar weniger Prüfkörper nach Feuchtelagerung unter thermischer Belastung brechen. "Verbesserung der Hydrolysestabilität" ist erfindungsgemäß somit äquivalent einer "Verbesserung der Izod-Kerbschlagzähigkeit nach Feuchtelagerung unter thermischer Belastung".

Unter "Polycarbonat" im erfindungsgemäßen Sinne werden sowohl aromatische Homopolycarbonate als auch aromatische Copolycarbonate verstanden. Dabei können die Polycarbonate in bekannter Weise linear oder verzweigt sein.

Die Herstellung der Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 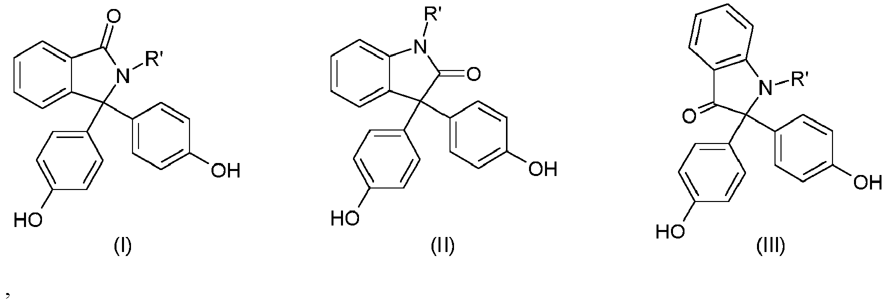 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Isooctylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, die Copolycarbonate auf Basis von 1,1-Bis-(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis-(4-hydroxyphenyl)-3,3,5-trimethylcyclohexan, sowie von den Dihydroxyarylverbindungen der Formeln (I), (II) und (III) 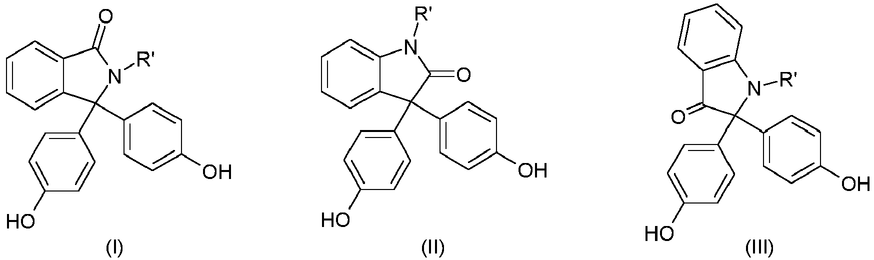 , in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Ganz besonders bevorzugt wird Bisphenol A basiertes Polycarbonat eingesetzt.

Bevorzugt sind auch Copolycarbonate, zu deren Herstellung Diphenole der allgemeinen Formel (la) eingesetzt wurden: 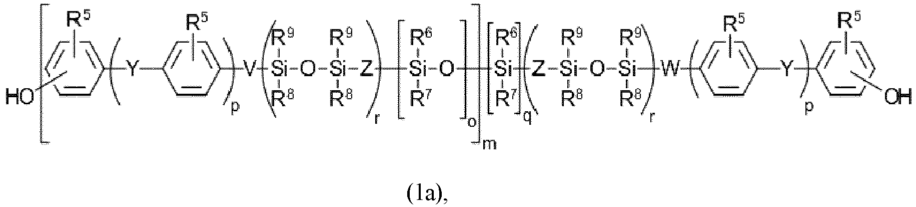 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis Cs-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁- bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 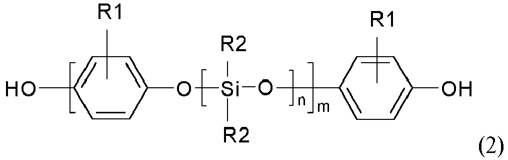 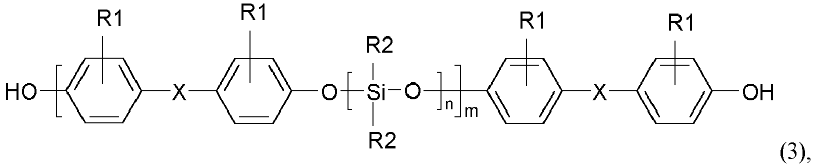
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis Cs-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 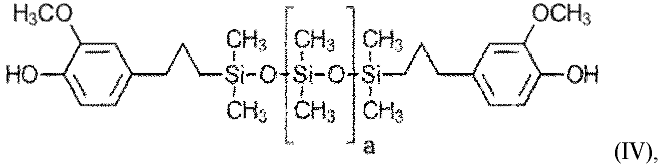 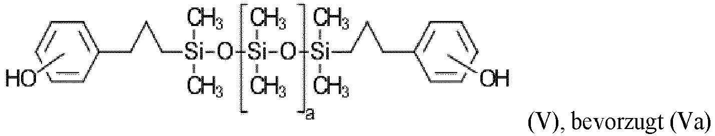 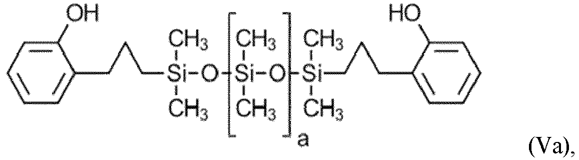 oder 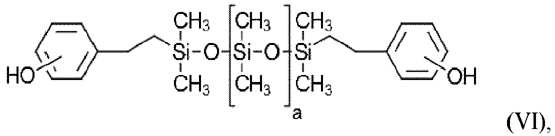 wobei a in Formel (IV), (V) und (VI) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (IV), (V) oder (VI) über Terephthalsäure und/oder Isophthalsäure miteinander unter Ausbildung von Estergruppen verknüpft sind.

Ebenso ist es bevorzugt, wenn in der Formel (la) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (la) und insbesondere auch deren Herstellung sind in der WO 2015/052106 A2 beschrieben.

Copolycarbonate mit Monomereinheiten der Formel (IV) und insbesondere auch deren Herstellung sind in der WO 2015/052106 A2 beschrieben.

Bei der Verwendung der mindestens zwei aromatischen Polycarbonate mit unterschiedlicher Viskosität, ausgedrückt in einer unterschiedlichen Schmelze-Volumenfließrate MVR, bevorzugt bestimmt nach ISO 1133:2012-03, von denen mindestens ein aromatisches Polycarbonat Alkylphenol-Endgruppen aufweist, zur Verbesserung der Hydrolysestabilität können grundsätzlich ein oder mehrere übliche Additive für Polycarbonat in den üblichen Mengen eingesetzt werden, ohne dass der Effekt merklich beeinflusst würde.

Solche weiteren Additive, wie sie üblicherweise Polycarbonaten zugesetzt werden, sind insbesondere Thermostabilisatoren, Flammschutzmittel, Antioxidantien, Entformungsmittel, Antitropfmittel, etwa Polytetrafluorethylen (Teflon) oder SAN-gekapseltes PTFE (z.B. Blendex 449), UV-Absorber, IR-Absorber, Schlagzähmodifikatoren, Antistatika, optische Aufheller, Füllstoffe, Lichtstreumittel, Umesterungsinhibitoren, Verträglichkeitsvermittler, von Komponente B verschiedene anorganische Pigmente und/oder Additive zur Lasermarkierung, insbesondere in den für Polycarbonat-basierte Zusammensetzungen üblichen Mengen. Derartige Additive sind beispielsweise in EP-A 0 839 623, WO-A 96/15102, EP-A 0 500 496 oder im "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der verbesserten Hydrolysestabilität auswirken.

Bevorzugt sind die Additive ausgewählt aus der Gruppe der Thermostabilisatoren, Flammschutzmittel, Antioxidantien, Entformungsmittel, Antitropfmittel, UV-Absorber, IR-Absorber, Schlagzähmodifikatoren, Antistatika, optischen Aufheller, Lichtstreumittel, Umesterungsinhibitoren, Verträglichkeitsvermittler und/oder Additive zur Lasermarkierung.

Ganz besonders bevorzugt sind die Zusammensetzungen, welche sich durch die erfindungsgemäße Verwendung ergeben, frei von Hydrolysestabilisatoren, insbesondere frei von Epoxidverbindungen, Carbodiimiden und wasserabsorbierenden anorganischen Salzen.

Die weiteren Additive sind besonders bevorzugt solche aus der Gruppe, bestehend aus Flammschutzmitteln, Antitropfmitteln, UV-Absorbern, Thermostabilisatoren, Antioxidantien, Antistatika, Entformungsmitteln, Schlagzähmodifikatoren, Umesterungsinhibitoren.

Geeignete Flammschutzmittel sind solche, ausgewählt aus der Gruppe der Alkali-, Erdalkali-, Ammoniumsalze von aliphatischen bzw. aromatischen Sulfonsäure-, Sulfonamid- und Sulfonimidderivaten, oder auch Kombinationen aus diesen.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Besonders bevorzugte Flammschutzmittel sind ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen. Bevorzugt werden Natrium- oder Kaliumperfluorbutansulfat, Natrium- oder Kaliumperfluoroctansulfat, Natrium- oder Kaliumdiphenylsulfonsulfonat oder deren Mischungen eingesetzt. Ganz besonders bevorzugt ist Kaliumperfluor-1-butansulfonat, welches kommerziell erhältlich ist, unter anderem als Bayowet^{®} C4 von der Firma Lanxess, Leverkusen, Deutschland.

Weiterhin bevorzugt sind Polyphosphazenderivate und deren Mischungen, beispielsweise Rabitle FP110 (Fushimi Pharmaceutical Co. Ltd).

Die Mengen von Alkali-, Erdalkali- und/oder Ammoniumsalzen von aliphatischen bzw. aromatischen Sulfonsäure-, Sulfonamid- und Sulfonimidderivaten in der thermoplastische Zusammensetzung, sofern diese eingesetzt werden, betragen bevorzugt insgesamt 0,05 Gew.-% bis 0,5 Gew.-%, weiter bevorzugt 0,06 Gew.-% bis 0,3 Gew.-%, besonders bevorzugt 0,06 Gew.-% bis 0,2 Gew.-%, ganz besonders bevorzugt 0,065 Gew.-% bis 0,12 Gew.-%, äußerst bevorzugt 0,065 Gew.-% bis 0,9 Gew.-%.

Zusätzlich oder alternativ enthaltene, bevorzugte Additive sind Thermostabilisatoren. Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite. Als Thermostabilisatoren werden bevorzugt Phosphor-Verbindungen mit der Oxidationszahl +III, insbesondere Phosphine und/oder Phosphite, eingesetzt. Als Thermostabilisatoren eignen sich besonders bevorzugt Triphenylphosphin, Tris-(2,4-di-tert-butylphenyl)phosphit (Irgafos 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox 1076), Bis-(2,4-dicumylphenyl)-pentaerythritoldiphosphit (Doverphos S-9228), Bis-(2,6-di-tert-butyl-4-methylphenyl)-pentaerythritoldiphosphit (ADK STAB PEP-36). Sie werden allein oder im Gemisch, z. B. Irganox B900 (Gemisch aus Irgafos168 und Irganox 1076 im Verhältnis 4:1) oder Doverphos S-9228 mit Irganox B900 bzw. Irganox 1076, eingesetzt.

Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

Bevorzugte Additive sind auch spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate. Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin 234, BASF SE, Ludwigshafen), 2-(2'-Hydroxy-5'-(tert.-octyl)-phenyl)-benzotriazol (Tinuvin 329, BASF SE, Ludwigshafen), Bis-(3-(2H-benztriazolyl)-2-hydroxy-5-tert.-octyl)methan (Tinuvin 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin 326, BASF SE, Ludwigshafen), sowie Benzophenone wie 2,4-Dihydroxybenzophenon (Chimasorb 22 , BASF SE, Ludwigshafen) und 2-Hydroxy-4-(octyloxy)-benzophenon (Chimassorb 81, BASF SE, Ludwigshafen), 2,2-Bis [[(2-cyano-1-oxo-3,3 -diphenyl-2-propenyl)oxy] -methyl] -1,3 -propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin 312, CAS-Nr. 23949-66-8, BASF SE, Ludwigshafen). Besonders bevorzugte spezielle UV-Stabilisatoren sind Tinuvin 360, Tinuvin 329, Tinuvin 326, Tinuvin 1600, Tinuvin 312, Uvinul 3030 und/oder Hostavin B-Cap, ganz besonders bevorzugt sind Tinuvin 329 und Tinuvin 360. Es können auch Mischungen der genannten Ultraviolett-Absorber eingesetzt werden.

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Die Zusammensetzungen können auch Phosphate oder Sulfonsäureester als Umesterungsinhibitoren enthalten. Bevorzugt ist Triisooctylphosphat als Umesterungsinhibitor enthalten. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Beispiele für als Additive geeignete Schlagzähmodifikatoren sind: Acrylat-core-shell-Systeme wie ABS oder MBS oder Butadienkautschuke (Paraloid-Typen von DOW Chemical Company); Olefin-Acrylat-Copolymere wie z. B. Elvaloy^{®}-Typen von DuPont; Siliconacrylatkautschuke wie z. B. die Metablen^{®}-Typen von Mitsubishi Rayon Co., Ltd..

Übliche Additive sind optional in den thermoplastischen Zusammensetzungen in Mengen von bevorzugt bis zu 30 Gew.-%, weiter bevorzugt bis zu 10,0 Gew.-%, noch weiter bevorzugt 0,01 Gew.-% bis 6,0 Gew.-%, besonders bevorzugt 0,1 Gew.-% bis 3,0 Gew.-%, enthalten.

Beispiele für weitere Polymere als weitere mögliche Bestandteile der thermoplastischen Zusammensetzungen sind Polyester wie Polyethylenterephthalat (PET) oder Polybutylenterephthalat (PBT).

Das aromatische Polycarbonat für die thermoplastische Polycarbonat-Zusammensetzung Z1 wird bevorzugt so gewählt, dass die Endgruppen ausgewählt sind aus der Gruppe, bestehend aus Phenol, Cumylphenol, p-tert.-Butylphenol. Eines der mindestens zwei aromatischen Polycarbonate weist Alkylphenol-Endgruppen, bevorzugt p-tert.-Butylphenol-Endgruppen, auf. Ein Weiteres der mindestens zwei aromatischen Polycarbonate weist bevorzugt Phenol-Endgruppen auf.

Bevorzugt wurden die verwendeten aromatischen Polycarbonate mit Alkylphenol-Endgruppen, bevorzugt p-tert.-Butylphenol-Endgruppen, durch das kontinuierliche Phasengrenzflächenkondensationsverfahren, weiter bevorzugt mit einem Hochviskos-Aufarbeitungsschritt, wie Ausdampfextruder oder Strangverdampfer zur Isolierung des Polycarbonats, hergestellt.

Konkrete Kombinationen geeigneter Polycarbonate, welche die Polycarbonatmischung in der Menge M1 in der thermoplastischen Polycarbonat-Zusammensetzung Z1 bilden, enthalten bevorzugt 25 bis 40 Gew.-% eines aromatischen Polycarbonats mit einer MVR von 15 bis 19 cm³/(10 min), bestimmt gemäß ISO 1133:2012-03 bei einer Prüftemperatur von 250°C und 2,16 kg Belastung, und 60 bis 75 Gew.-% eines aromatischen Polycarbonats mit einer MVR von 5 bis 9 cm³/(10 min), bestimmt gemäß ISO 1133:2012-03 bei einer Prüftemperatur von 300°C und 1,2 kg Belastung.

Alternativ bevorzugt enthalten solche Mischungen 5 bis 20 Gew.-% eines aromatischen Polycarbonats mit einer MVR von 15 bis 19 cm³/(10 min), bestimmt gemäß ISO 1133:2012-03 bei einer Prüftemperatur von 250°C und 2,16 kg Belastung, 80 bis 95 Gew.-% eines aromatischen Polycarbonats mit einer MVR von 8 bis 11 cm³/(10 min), bestimmt gemäß ISO 1133:2012-03 bei einer Prüftemperatur von 300°C und 1,2 kg Belastung, und 0 bis 5 Gew.-% eines aromatische Polycarbonats mit einer MVR von 5 bis 9 cm³/(10 min), bestimmt gemäß ISO 1133:2012-03 bei einer Prüftemperatur von 300°C und 1,2 kg Belastung.

Die Polycarbonat-Zusammensetzungen Z1, die sich durch die erfindungsgemäße Verwendung ergeben, können neben der Mischung von Polycarbonaten in der Menge M1, die zur Verbesserung der Hydrolysestabilität ein einzelnes Polycarbonat bzw. Polycarbonat mit einer Schmelzevolumenfließrate mit einer Endgruppe ersetzen, weitere Additive oder aber auch weiteres Polycarbonat enthalten, wobei die sich durch die erfindungsgemäße Verwendung ergebende Zusammensetzung Z1 und die Referenzzusammensetzung Z2 ansonsten identisch sind.

Die Zusammensetzungen Z1 und Z2 basieren auf aromatischem Polycarbonat (= "Polycarbonat-Zusammensetzungen") und enthalten bevorzugt mindestens 70 Gew.-%, weiter bevorzugt mindestens 80 Gew.-%, besonders bevorzugt mindestens 90 Gew.-%, ganz besonders bevorzugt mindestens 95 Gew.-% aromatisches Polycarbonat insgesamt, d.h. Polycarbonat in der Menge M1 zusammen mit ggf. vorhandenem weiteren aromatischen Polycarbonat. Die erfindungsgemäße Verwendung sieht den Austausch eines Polycarbonats gegen eine Mischung aus mindestens zwei Polycarbonaten mit dem Ziel einer verbesserten Hydrolysestabilität vor.

Die entsprechend erhaltenen Zusammensetzungen werden vorzugsweise zur Herstellung von Formteilen verwendet. Die Zusammensetzungen weisen bevorzugt eine Schmelze-Volumenfließrate (MVR) von 3 bis 40 cm³/(10 min), weiter bevorzugt von 6 bis 35 cm³/(10 min), besonders bevorzugt von 8,5 bis 24 cm³/(10 min), ganz besonders bevorzugt von 9 bis 20 cm³/(10 min), bestimmt nach ISO 1133:2012-3 (Prüftemperatur 300°C, Masse 1,2 kg), auf.

Die Hydrolysestabilität ist besonders, aber nicht ausschließlich, wichtig bei Außenanwendungen, wie z. B. Swimmingpoolabdeckungen, Stadiondächern, Polycarbonatplatten im Bauwesen, etwa für Gewächshäuser und Terrassenüberdachungen, einer Beleuchtungseinheit, z.B. für Straßenlampengehäuse, Schalterschränke und Gehäuse für elektrische Anlagen und Bauteile, Batterieladestationen, Automobilaußenteile wie Streuscheiben oder Blinkerabdeckungen, also bei Formteilen, die Teil obiger Anwendungen sind, und welche dazu bestimmt sind, in ihrer Anwendung der Witterung ausgesetzt zu sein. Entsprechende Formteile sind auch Teil eines optischen (Linsen-)Systems, eines Medicalproduktes oder ein Filament für den 3D-Druck. Weitere Anwendungen sind Essgeschirre, Schüsseln, Becher, Gläser, Tassen, Wasserflaschen, Automobilinnenteile wie Schalter, Displayfolien und -abdeckungen, Medizinanwendungen wie z. B. Dialysatorgehäuse oder Mehrwegehähne. Entsprechende Formteile, inklusive Profile, Filamente für zum Beispiel 3D-Printing, aus sich bei erfindungsgemäßer Verwendung ergebenden Zusammensetzungen, auch mit entsprechenden als bevorzugt, weiter bevorzugt etc. für die erfindungsgemäße Verwendung angegebenen Merkmalen, welche Teil der vorgenannten Anwendungen sind, sind ebenfalls Gegenstand der vorliegenden Erfindung.

### Beispiele

### 1. Beschreibung der Rohstoffe und Prüfmethoden

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 275 °C.

### a) Rohstoffe

- **A-1:**: Lineares Polycarbonat auf Basis von Bisphenol A mit einer Schmelze-Volumenfließrate MVR von 17 cm³/(10 min) (gemäß ISO 1133:2012-03, bei einer Prüftemperatur von 250°C und 2,16 kg Belastung) mit tert.-Butylphenol als Endgruppe.
- **A-2:**: Lineares Polycarbonat auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung) mit Phenol als Endgruppe.
- **A-2a:**: Lineares Polycarbonat in Pulverform auf Basis von Bisphenol A mit einer Schmelze-Volumenfließrate MVR von 6 cm³/(10 min) (gemäß ISO 1133:2012-03, bei einer Prüftemperatur von 300°C und 1,2 kg Belastung) mit Phenol als Endgruppe.
- **A-3:**: Lineares Polycarbonat auf Basis von Bisphenol A mit einer Schmelze-Volumenfließrate MVR von 12 cm³/(10 min) (gemäß ISO 1133:2012-03, bei einer Prüftemperatur von 300°C und 1,2 kg Belastung) mit Phenol als Endgruppe.
- **A-4**:: Lineares Polycarbonat auf Basis von Bisphenol A mit einer Schmelze-Volumenfließrate MVR von 9,5 cm³/(10 min) (gemäß ISO 1133:2012-03, bei einer Prüftemperatur von 300°C und 1,2 kg Belastung) mit Phenol als Endgruppe.

- **A-5:**: Lineares Polycarbonat auf Basis von Bisphenol A mit einer Schmelze-Volumenfließrate MVR von 19 cm³/(10 min) (gemäß ISO 1133:2012-03, bei einer Prüftemperatur von 300°C und 1,2 kg Belastung) mittert.-Butylphenol als Endgruppe.
- **A-5a:**: Lineares Polycarbonat in Pulverform auf Basis von Bisphenol A mit einer Schmelze-Volumenfließrate MVR von 19 cm³/(10 min) (gemäß ISO 1133:2012-03, bei einer Prüftemperatur von 300°C und 1,2 kg Belastung) mittert.-Butylphenol als Endgruppe.
- **B-1:**: Thermostabilisator Triphenylphosphin, kommerziell erhältlich bei der BASF SE, Ludwigshafen.
- **B-2:**: Entformungsmittel PETS (Pentaerythrittetrastearat) der Firma Emery Oleochemicals, Loxstedt.
- **B-3:**: Tinuvin 329, UV-Stabilisator mit Benzotriazolstruktur, kommerziell erhältlich bei der BASF SE, Ludwigshafen.

### b) Prüfmethoden

Die Musterplatten wurden jeweils durch Spritzguss hergestellt.

Die Bestimmung der **Schmelze-Volumenfließrate** (MVR) erfolgte nach ISO 1133:2012-03 (bei einer Prüftemperatur von 300 °C, Masse 1,2 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischem Stress.

Die Bestimmung der **Schmelzeviskosität** erfolgte in Anlehnung an ISO 11443:2005 mit dem Gerät Visco-Robo 45.00 der Fa. Göttfert.

Die Bestimmung der **Lösungsviskosität** (eta rel, ηᵣₑₗ) erfolgte nach ISO 1628-4:1999-03 mit einem Ubbelohde-Viskosimeter. Dazu wurden die Granulate gelöst und die Füllstoffe durch Filtration abgetrennt. Das Filtrat wurde eingeengt und getrocknet. Der erhaltene Film wurde zur Messung der Lösungsviskosität verwendet.

Die **Vicat-Erweichungstemperatur VST/B50** als Maß für die Wärmeformbeständigkeit wurde gemäß ISO 306:2013 an Prüfkörpern der Abmessung 80 mm × 10 mm × 4 mm mit einer Stempellast von 50 N und einer Aufheizgeschwindigkeit von 50°C/h mit dem Gerät Coesfeld Eco 2920 der Firma Coesfeld Materialtest bestimmt.

Die **Izod-Kerbschlagzähigkeit** wurde nach ISO 180 (2019) an 80 mm × 10 mm × 3 mm Normprüfstäben im Ausgangszustand und nach Durchführung des Kochtests über einen definierten Zeitraum bestimmt.

Feuchtelagerung bzw. Kochtest: Die Normprüfstäbe wurden in einem mit vollentsalzten Wasser gefüllten 6 Liter Rundkolben unter Rückfluss gelagert. Dieses bedeutet eine Feuchtelagerung unter thermischer Belastung. Nach unterschiedlichen Zeiten wurden Prüfstäbe entnommen und an diesen die Kerbschlagzähigkeit bestimmt sowie die Lösungsviskosität ηᵣₑₗ mit einem Ubbelohde-Viskosimeter gemessen.

Vergleichsversuche sind in den nachfolgenden Tabellen mit "V" gekennzeichnet, erfindungsgemäße Versuche mit "E".

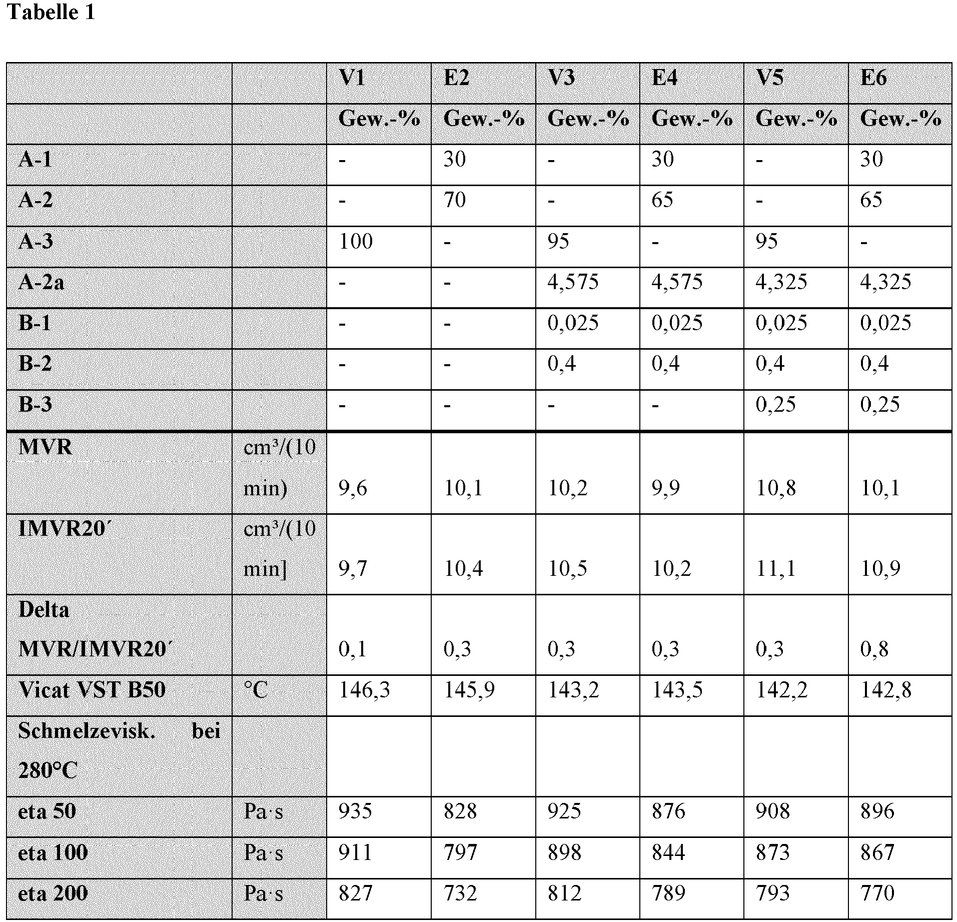

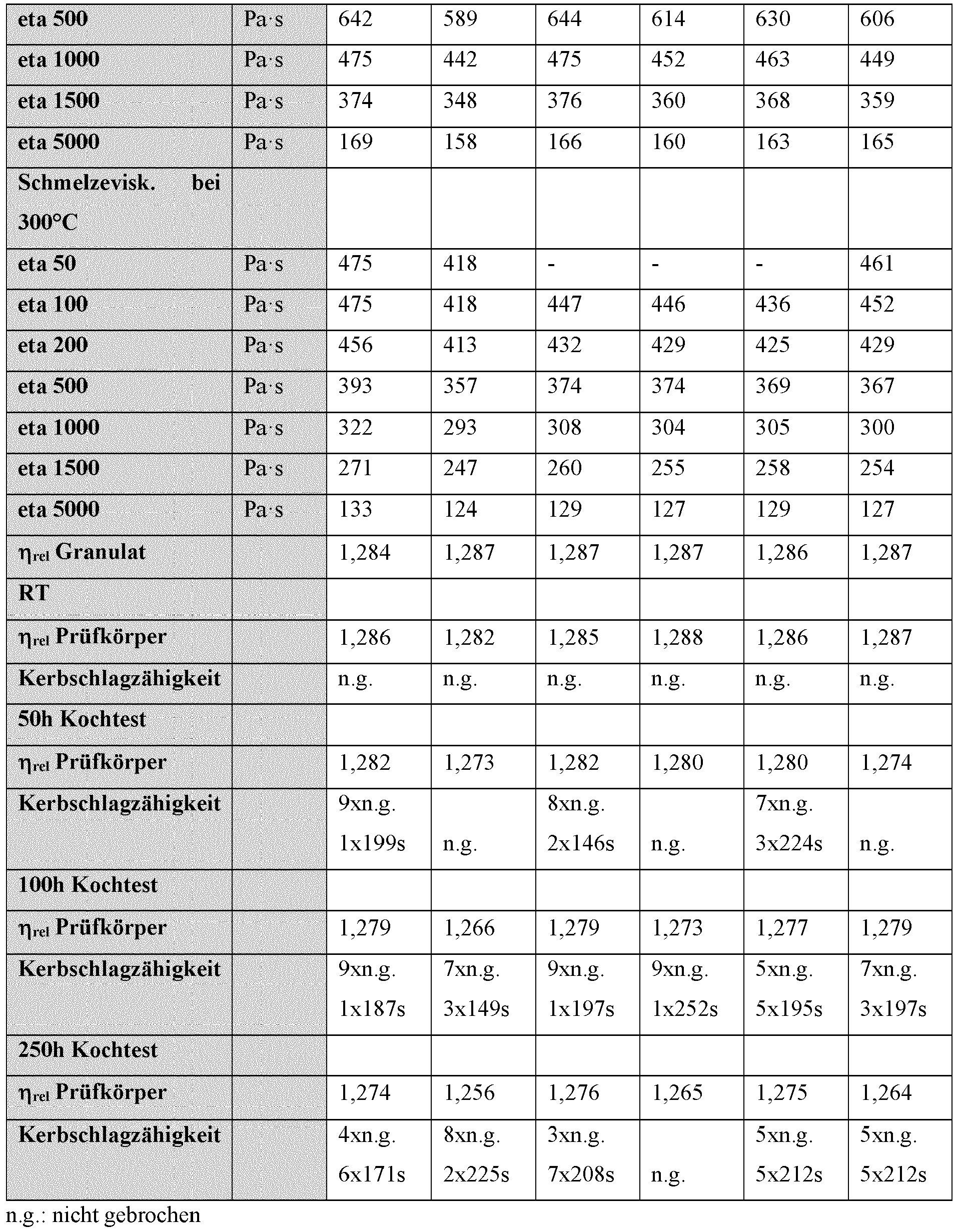

Zur Illustration des Anspruches 1 ist nachfolgend anhand der Beispiele V1 und E2 die verwendete Nomenklatur erläutert. Die Polycarbonat-Zusammensetzung Z1 ist die Gesamtzusammensetzung des Versuches E2. Die Polycarbonat-Referenzzusammensetzung Z2 ist die Gesamtzusammensetzung des Versuches V1. In dem Versuch E2 hat die erfindungsgemäße Mischung, bestehend aus 30 Gew.-% A-1 und 70 Gew.-% A-2, die 100 Gew.-% A-3 aus Versuch V1 ersetzt. Die Menge der Polycarbonat-Mischung in Z1 ist 100 Gew.-%, entsprechend der Menge von A-3 in dem Versuch V1. Die Gesamtzusammensetzung Z1 aus Versuch E2 weist eine Schmelzevolumenfließrate MVR1 auf. Die Gesamtzusammensetzung aus Versuch V1 weist eine Schmelzevolumenfließrate MVR2 auf. Mit einem Wert von 9,6 cm³/(10 min) bewegt sich MVR2 nahezu auf gleichem Niveau wie MVR1 mit 10,1 cm³/(10 min). Die aromatischen Polycarbonate der Mischung in der Menge M1 in der Zusammensetzung Z1 sind so gewählt, dass deren MVR etwa der des aromatischen Polycarbonats in der Referenzzusammensetzung Z2 entspricht. Diese Auswahl liegt im Können des Fachmanns. Hierdurch ergeben sich auch die entsprechenden MVR1 und MVR2-Werte, die nach dem Patentanspruch 1 nur geringfügig voneinander abweichen und für den Fachmann als einander entsprechend gelten.

Analog ist die Bezeichnung bei den Beispielen V3 und E4. Die Gesamtzusammensetzung des Versuches E4 ist Z1, die Gesamtzusammensetzung des Versuches V3 ist Z2. In der Mischung ist die Gesamtmenge der aromatischen Polycarbonate, welche die gleiche Menge eines Polycarbonates aus der Zusammensetzung Z2 des Versuches V3 ersetzen, M1. M1 ist gleich 95 Gew.-% - die Mengen von den Polycarbonaten A-1 und A-2, welche die Menge des Polycarbonats A-3 aus V3 ersetzen. Die Gesamtzusammensetzung des Versuches E4 hat eine Schmelzevolumenfließrate MVR1. Die Gesamtzusammensetzung des Referenzversuches V3 hat eine Schmelzevolumenfließrate MVR2. Diese sind für den Fachmann nahezu gleich, die Abweichung beträgt weniger als 10%. Neben dem Polycarbonat der Referenzzusammensetzung A-3, das in dem erfindungsgemäßen Versuch durch die Mischung A-1 und A-2 ersetzt ist, enthalten beide Zusammensetzungen noch eine kleine Menge Polycarbonat in Pulverform, A-2a, das zur Reduktion von Dosierschwankungen und zum homogenen Eincompoundieren der Additive verwendet wurde. Dieses ist das "weitere Polycarbonat", welches auch in Patentanspruch 1 erwähnt ist.

Es ist zu erkennen, dass durch die erfindungsgemäße Verwendung von Mischungen von Polycarbonaten, in denen einer der Mischungspartner eine Alkylphenol-Endgruppe, bevorzugt eine p-tert.-Butylphenol-Endgruppe, aufweist, in Zusammensetzungen, deren Mischungs-Schmelzevolumenfließrate äquivalent der Schmelzevolumenfließrate der Referenzzusammensetzung ist, die Kerbschlagzähigkeit verbessert wird; weniger Stäbe brechen. Die verbesserte Kerbschlagzähigkeit ist auch nach Durchführung des Kochtests, also einer Feuchtelagerung unter thermischer Belastung, zu erkennen; es wird somit bei den erfindungsgemäßen Versuchen eine verbesserte Hydrolysestabilität erhalten. Die gute Wärmeformbeständigkeit bleibt dabei erhalten. Es ist weiterhin zu erkennen, dass die Schmelzviskositäten der erfindungsgemäßen Mischungen bei verschiedenen Scherraten und Temperaturen niedriger sind als in den Referenzzusammensetzungen. Dies wirkt sich positiv in Form eines besseren Fließens auf das Verarbeitungsverhalten im Spritzguss, speziell bei Dünnschichtanwendungen, also bei Wandstärken kleiner 3 mm, bevorzugt kleiner 2 mm, besonders bevorzugt kleiner 1,5 mm, aus.

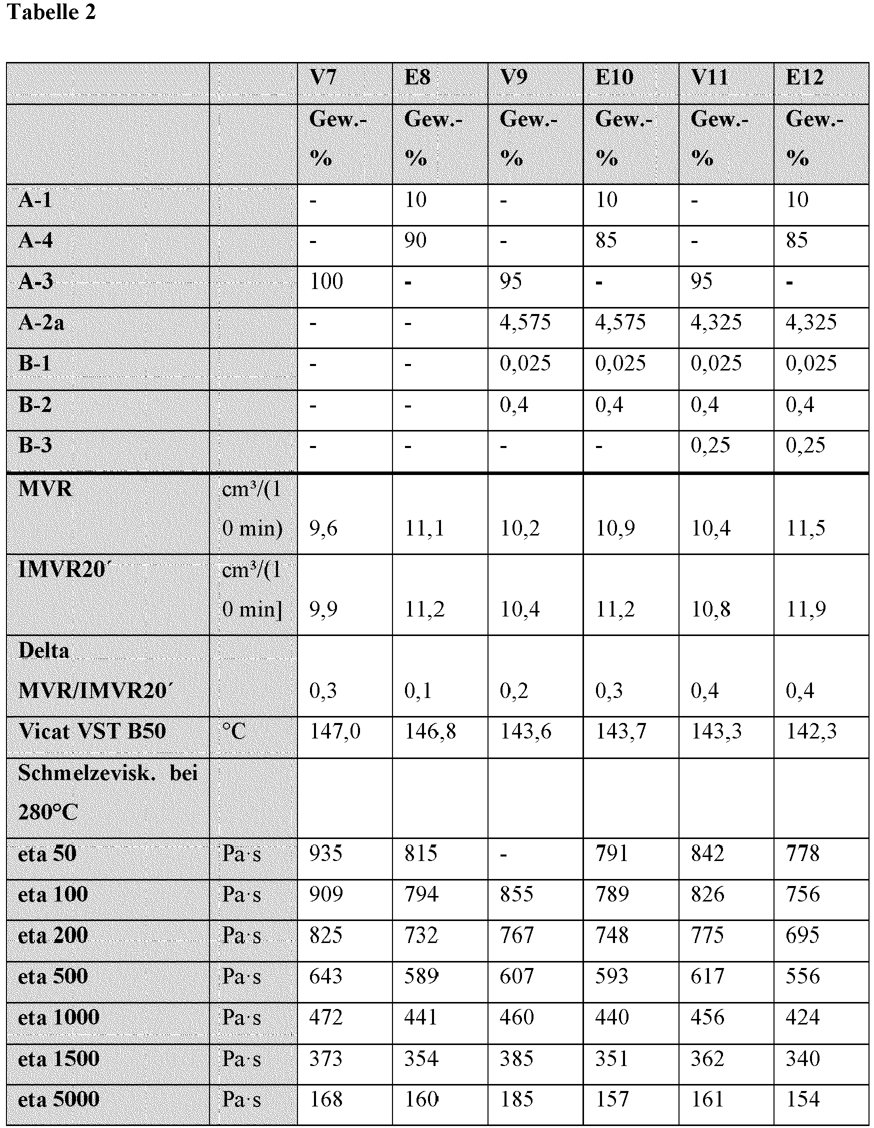

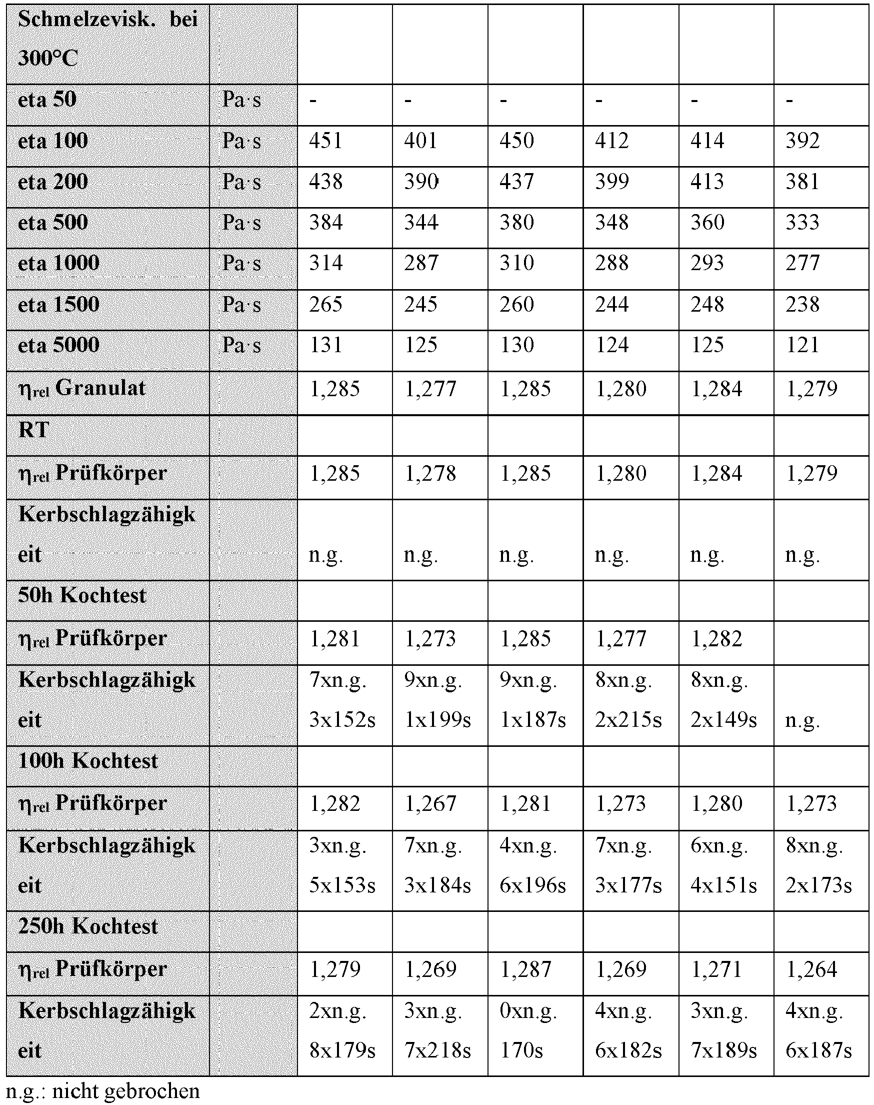

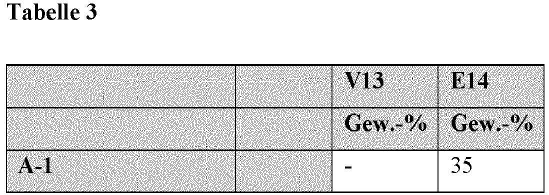

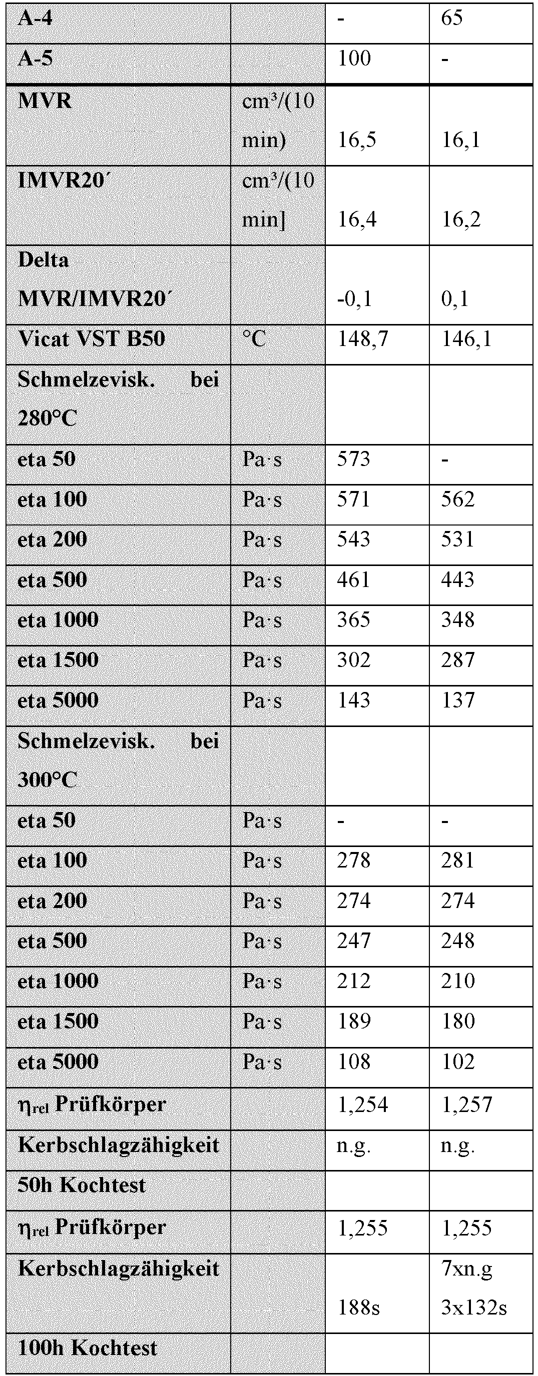

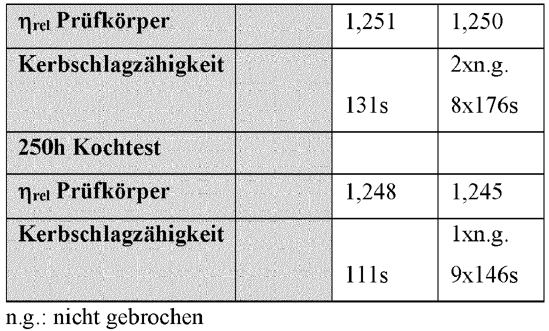

## Patentansprüche

1. Verwendung einer Mischung von mindestens zwei aromatischen Polycarbonaten mit unterschiedlicher Schmelze-Volumenfließrate MVR,
wobei mindestens ein aromatisches Polycarbonat Alkylphenol-Endgruppen aufweist,
in einer Gesamtmenge M1 in einer thermoplastischen Polycarbonat-Zusammensetzung Z1,
wobei die thermoplastische Polycarbonat-Zusammensetzung Z1 eine Schmelzevolumenfließrate MVR1 aufweist,
zur Verbesserung der Hydrolysestabilität
im Vergleich zu einer thermoplastischen Polycarbonat-Zusammensetzung Z2, aufweisend eine Schmelzevolumenfließrate MVR2 = (MVR1 ± 10%),
die anstelle der Kombination aus mindestens zwei aromatischen Polycarbonaten in insgesamt derselben Menge M1 nur ein aromatisches Polycarbonat enthält,
wobei außer dem Unterschied in dem aromatischen Polycarbonat in der Menge M1 die thermoplastische Polycarbonat-Zusammensetzung Z1 und die thermoplastische Polycarbonat-Zusammensetzung Z2 ansonsten identisch sind und optional weiteres aromatisches Polycarbonat und/oder ein oder mehrere Additiv(e) enthalten.

2. Verwendung gemäß Anspruch 1, wobei die Hydrolysestabilität bestimmt wird als Veränderung der Izod-Kerbschlagzähigkeit der jeweiligen thermoplastischen Polycarbonat-Zusammensetzung Z1 oder Z2 vor und nach Feuchtelagerung unter thermischer Belastung über einen definierten Zeitraum.

3. Verwendung gemäß Anspruch 1 oder 2, wobei die Alkylphenol-Endgruppen p-tert.-Butylphenol-Endgruppen sind.

4. Verwendung gemäß einem der vorhergehenden Ansprüche, wobei die Endgruppen der weiteren aromatischen Polycarbonate der Mischung in der Zusammensetzung Z1 ausgewählt sind aus der Gruppe, bestehend aus Phenol, Cumylphenol, p-tert.-Butylphenol.

5. Verwendung gemäß einem der vorhergehenden Ansprüche, wobei die Polycarbonate hergestellt sind durch ein kontinuierliches Phasengrenzflächenkondensationsverfahren mit einem Hochviskos-Aufarbeitungsschritt.

6. Verwendung gemäß einem der vorhergehenden Ansprüche, wobei 25 bis 40 Gew.-% eines aromatische Polycarbonats mit einer MVR von 15 bis 19 cm³/(10 min), bestimmt gemäß ISO 1133:2012-03 bei einer Prüftemperatur von 250°C und 2,16 kg Belastung, und 60 bis 75 Gew.-% eines aromatischen Polycarbonats mit einer MVR von 5 bis 9 cm³/(10 min), bestimmt gemäß ISO 1133:2012-03 bei einer Prüftemperatur von 300°C und 1,2 kg Belastung, die Mischung der thermoplastischen Polycarbonat-Zusammensetzung Z1 bilden.

7. Verwendung gemäß einem der vorhergehenden Ansprüche, wobei 5 bis 20 Gew.-% eines aromatische Polycarbonats mit einer MVR von 15 bis 19 cm³/(10 min), bestimmt gemäß ISO 1133:2012-03 bei einer Prüftemperatur von 250°C und 2,16 kg Belastung, 80 bis 95 Gew.-% eines aromatischen Polycarbonats mit einer MVR von 8 bis 11 cm³/(10 min), bestimmt gemäß ISO 1133:2012-03 bei einer Prüftemperatur von 300°C und 1,2 kg Belastung, und 0 bis 5 Gew.-% eines aromatischen Polycarbonats mit einer MVR von 5 bis 9 cm³/(10 min), bestimmt gemäß ISO 1133:2012-03 bei einer Prüftemperatur von 300°C und 1,2 kg Belastung, die Mischung bilden.

8. Verwendung gemäß einem der vorhergehenden Ansprüche, wobei die Zusammensetzung frei von üblichen Hydrolysestabilisatoren ist.

9. Verwendung gemäß einem der vorhergehenden Ansprüche, wobei die thermoplastische Polycarbonat-Zusammensetzung Z1 mindestens 70 Gew.-% aromatisches Polycarbonat enthält.

10. Verwendung gemäß einem der vorhergehenden Ansprüche, wobei ein aromatisches Polycarbonat der Mischung Phenol-Endgruppen aufweist.

11. Formteil aus einer thermoplastischen Polycarbonat-Zusammensetzung, umfassend eine Mischung von mindestens zwei Polycarbonaten mit unterschiedlicher Schmelze-Volumenfließrate MVR, gemessen nach ISO 1133:2012-03 bei einer Prüftemperatur von 300 °C, Masse 1,2 kg, wobei mindestens ein aromatisches Polycarbonat p-tert.-Butylphenol-Endgruppen aufweist, wobei das Formteil dazu bestimmt ist, in seiner Anwendung der Witterung ausgesetzt zu sein.

12. Formteil gemäß Anspruch 11, wobei auf die Mischung der Polycarbonate die in den Ansprüchen 1 bis 10 genannten Merkmale zutreffen.

13. Formteil gemäß Anspruch 11 oder 12, wobei das Formteil Teil einer Swimmingpoolabdeckung, eines Stadiondaches, einer Beleuchtungseinheit, eines Schalterschrankes, eines Gehäuses für elektrische Anlagen und Bauteile, einer Batterieladestation, eines Automobilaußenteiles, eines optischen (Linsen-)Systems, eines Medicalproduktes oder ein Filament für den 3D-Druck oder eine Polycarbonatplatte im Bauwesen ist.
